Europäisches Patentamt

European Patent Office

Office européen des brevets

(19)

(11) EP 1 094 396 A2

# (12) EUROPEAN PATENT APPLICATION

(43) Date of publication:
25.04.2001 Bulletin 2001/17

(51) Int. Cl.$^7$: **G06F 13/40**

(21) Application number: 00309186.5

(22) Date of filing: 18.10.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 18.10.1999 JP 29504799

(71) Applicant:
**Matsushita Electric Industrial Co., Ltd.**
**Kadoma-shi, Osaka 571-8501 (JP)**

(72) Inventor: **Saito, Yoshiyuki**
**Osaka-fu, 576-0053 (JP)**

(74) Representative:
**Crawford, Andrew Birkby et al**
**A.A. Thornton & Co.**
**235 High Holborn**
**London WC1V 7LE (GB)**

## (54) Bus system suitable for increasing transmission speed

(57) A bus system including: a bus including a plurality of transmission lines; a plurality of data output units provided for respective transmission lines, each data output unit converting n-bit data (where n is at least 2) into an electric potential, out of $2^n$ types of electric potential, according to a value of the n-bit data and outputting the electric potential to a corresponding transmission line; and a plurality of data input units provided for respective transmission lines, each data input unit restoring n-bit data using an electric potential inputted from a corresponding transmission line. Each data input unit includes: $2^n$-1 comparators, each of which compares an electric potential inputted from a corresponding transmission line with one of $2^n$-1 reference potentials, each of the $2^n$-1 reference potentials falling within one of ranges between the $2^n$ types of electric potential; and a restoring unit for restoring n-bit data using comparison results of the $2^n$-1 comparators.

FIG.2

EP 1 094 396 A2

**Description**

BACKGROUND OF THE INVENTION

1. Field of the Invention

The present invention relates to a bus system that transmits an address or data between semiconductor integrated circuits.

2. Description of the Related Art

As the operating clock speeds of large-scale integrated circuits (hereinafter referred to as the "LSIs"), such as processors, has become higher in recent years, it is becoming increasingly important to increase the data transmission speeds between LSIs mounted on a printed circuit board.

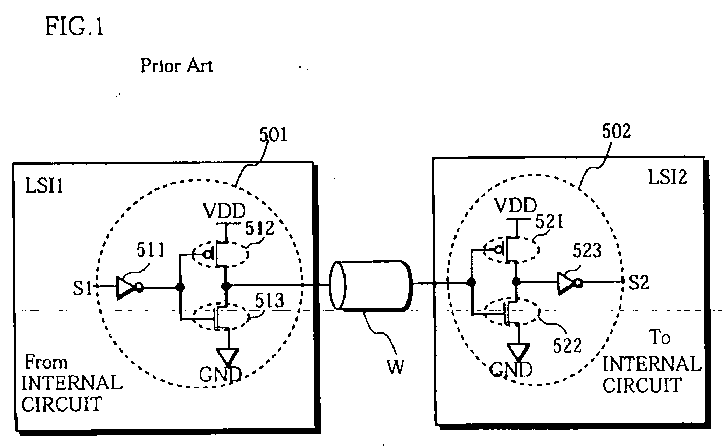

Fig. 1 shows a circuit portion of a conventional bus system. The circuit portion corresponds to one transmission line out of a plurality of transmission lines composing a bus, and includes a transmission circuit 501 in an LSI 1, a transmission line W, and a reception circuit 502 in an LSI 2.

In the transmission circuit 501, a binary signal S1 from an internal circuit of the LSI 1 is inverted by an inverter 511 and then is applied to the gates of a P-type MOS transistor (hereinafter referred to as the "pMOS") 512 and an N-type MOS transistor (hereinafter referred to as the "nMOS") 513, thereby turning on one of the pMOS 512 and the nMOS 513. Here, each MOS transistor (also referred to as "MOS" in this specification) is a field-effect transistor where the application of a voltage to the gate electrode results in a strong electric field being formed via the gate oxide layer on the silicon substrate and thus controls the current flowing between the source and drain. There are two types of MOSs: nMOSs whose current carriers are electrons and pMOSs whose current carriers are holes. If the binary signal S1 is at a high level, the pMOS 512 is turned on and an electric potential VDD (a high level) is applied to the transmission line W; if S1 is at a low level, the nMOS 513 is turned on and an electric potential GND (a low level) is applied to the transmission line W.

In the reception circuit 502, one of a pMOS 521 and an nMOS 522 is turned on by the signal transmitted over the transmission line W and the source electric potential (VDD or GND) of the turned-on transistor is applied to an inverter 523 through the drain. The inverter 523 inverts the electric potential and outputs the inverted electric potential as a binary signal S2. More specifically, if the signal on the transmission line W is at the high level, the nMOS 522 is turned on, low level electric potential is applied to the inverter 523, and the signal S2 becomes high level. If the signal on the transmission line W is at the low level, the pMOS 521 is turned on, high level electric potential is applied to the inverter 523, and the signal S2 becomes low level. In this manner, the binary signal S1 is transmitted from the LSI 1 to the LSI 2.

The operation frequencies of LSIs have dramatically increased in recent years, but the low signal transmission speeds between LSIs on printed boards is an obstacle to improvements in system speeds. Therefore, there are demands for speeding up signal transmission between LSIs. As can be seen from the development of the processor architecture of personal computers, signal transmission between LSIs has conventionally been speeded up by increasing bus widths (the number of bits of data buses). In the case of CPUs manufactured by Intel Corp., for instance, the data bus width of CPUs was increased from 32 bits to 64 bits as the x486 series was replaced by the Pentium series. By increasing the bus width, the signal transmission can be speeded up even if signal frequencies are not increased.

If the bus width is increased, however, the number of terminals of LSIs also needs to be increased according to the increase in the bus width. In addition to the improvement in operation frequency, the die density is recently increasing. As a result, the number of terminals is increasingly becoming the main determining factor for the die size of an LSI. Increasing the number of terminals therefore increases the die size and the cost of an LSI.

As a result, an inter-LSI interface that increases data transmission speeds without increasing the number of terminals of LSIs is required to further improve system performance.

SUMMARY OF THE INVENTION

The object of the present invention is therefore to provide a bus system that increases the data transmission speed between LSIs without increasing the number of terminals of the LSIs.

The stated object is achieved by a bus system including: a bus including a plurality of transmission lines; a plurality of data output units provided for respective transmission lines, each data output unit converting n-bit data (where n is at least 2) into an electric potential, out of $2^n$ types of electric potential, according to a value of the n-bit data and outputting the electric potential to a corresponding transmission line; and a plurality of data input units provided for respective transmission lines, each data input unit restoring n-bit data using an electric potential inputted from a corresponding transmission line.

With this construction, the bus system transmits n-bit data over a single transmission line by associating the value of the n-bit data with one of the $2^n$ types of electric potential. As a result, the data transmission speed is multiplied by n without increasing the number of terminals of LSIs.

Here, each data output unit includes: a decode circuit for decoding n-bit data into $2^n$ signals, one of which selectively becomes active; and an electric potential generating circuit for generating an electric potential, out of the $2^n$ types of electric potential, according to the active signal.

Here, the electric potential generating circuit includes $2^n$ transistors, each of which generates one of the $2^n$ types of electric potential and corresponds to one of the $2^n$ signals, and generates an electric potential, out of the $2^n$ types of electric potential, by turning on one transistor corresponding to the active signal.

With this construction, each of the $2^n$ types of electric potential is associated with one of the $2^n$ transistors. As a result, the $2^n$ types of electric potential are generated without difficulty.

Here, each transistor is connected between a corresponding transmission line and one of $2^n$ power lines, electric potentials of the $2^n$ power lines differing from each other.

With this construction, the bus system includes $2^n$ power lines having different electric potentials. This allows simple switching transistors, which each have a resistance of about $0\Omega$, to be used as the $2^n$ transistors.

Here, each data output unit includes n totem-pole circuits, each totem-pole circuit corresponding to one bit of n-bit data and including two transistors that are connected to each other in a totem-pole form, with a corresponding transmission line being connected between the two transistors, where one transistor in each totem-pole circuit is simultaneously turned on by a corresponding bit of the n-bit data, and an electric potential, out of the $2^n$ types of electric potential, is generated in the corresponding transmission line according to a combination of the simultaneously turned-on transistors.

Here, each of the $2^n$ types of electric potential corresponds to one combination of simultaneously turned-on transistors in the n totem-pole circuits.

With this construction, each data output unit is not required to include a decode circuit. Also, each data output unit is not required to include $2^n$ transistors, that is, it is enough for each data output unit to include 2n transistors. This reduces the hardware scale of the data output unit.

Here, each totem-pole circuit is connected between one of pairs of power lines, electric potentials of power lines in each pair differing from electric potentials of power lines in other pairs, and each of the $2^n$ types of electric potential is determined by on-resistances of simultaneously turned-on transistors in the n totem-pole circuits and electric potentials of power lines connected to the simultaneously turned-on transistors.

With this construction, each data output unit is realized with $2^n$ power lines.

Here, the n totem-pole circuits are all connected between a first power line and a second power line, a termination resistor is connected between the corresponding transmission line and a third power line, and each of the $2^n$ types of electric potential is determined by on-resistances of simultaneously turned-on transistors in the n totem-pole circuits, electric potentials of power lines connected to the simultaneously turned-on transistors, a resistance of the termination resistor, and an electric potential of the third power line.

With this construction, each data output unit is not required to include $2^n$ power lines, that is, it is enough for the bus system to include two power lines (the first and second power lines).

Here, each data input unit includes: $2^n-1$ comparators, each of which compares an electric potential inputted from a corresponding transmission line with one of $2^n-1$ reference potentials, each of the $2^n-1$ reference potentials falling within one of ranges between the $2^n$ types of electric potential; and a restoring unit for restoring n-bit data using comparison results of the $2^n-1$ comparators.

BRIEF DESCRIPTION OF THE DRAWINGS

These and other objects, advantages and features of the invention will become apparent from the following description thereof taken in conjunction with the accompanying drawings which illustrate a specific embodiment of the invention. In the drawings:

Fig. 1 shows a circuit portion of a conventional bus system, the circuit portion corresponding to one transmission line out of a plurality of transmission lines composing a bus and including a transmission circuit in an LSI, a transmission line W, and a reception circuit in another LSI;

Fig. 2 shows the main construction elements in a circuit portion of a bus system of the first embodiment of the present invention;

Fig. 3 shows the logic of the data inputs and outputs of a data transmission circuit and a data reception circuit of the bus system of the first embodiment;

Fig. 4 shows the main construction elements in a circuit portion of a bus system of the second embodiment;

Fig. 5 shows the main construction elements in a circuit portion of a bus system of the third embodiment;

Fig. 6 shows the main construction elements in a circuit portion of a bus system of the fourth embodiment;

Fig. 7 shows the main construction elements in a circuit portion of a bus system of the fifth embodiment;

Fig. 8 shows the main construction elements in a circuit portion of a bus system of the sixth embodiment; and

Fig. 9 shows the construction of a bus system for m-bit data transmission.

## DESCRIPTION OF THE PREFERRED EMBODIMENTS

〈First Embodiment〉

〈Construction〉

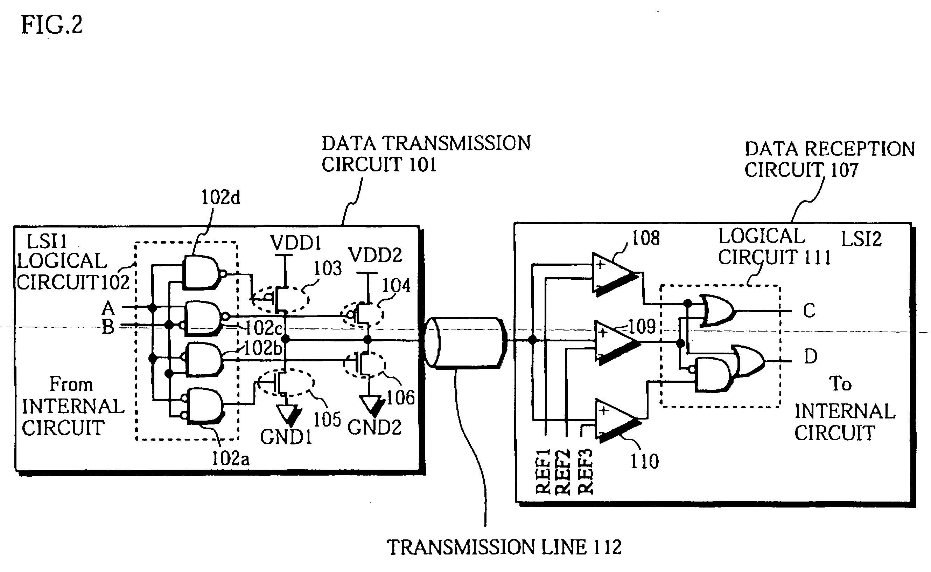

Fig. 2 shows the main construction elements in a circuit portion of a bus system of the first embodiment of the present invention. The circuit portion corresponds to one transmission line out of a plurality of transmission lines composing a bus, and includes a data transmission circuit 101 in an LSI 1, a transmission line 112, and a data reception circuit 107 in an LSI 2. The same construction elements are provided for each transmission line of the bus.

The LSI 1 is a master LSI, such as a CPU, a memory controller, or a DMA controller, that accesses to the LSI 2 via the bus. The LSI 2 is a slave LSI, such as a memory or a peripheral circuit, that is accessed by the LSI 1 via the bus. Fig. 2 does not show control signals (such as a clock signal, a read/write signal, an address strobe signal, and a data strobe signal) for controlling the timings of data inputs and outputs because these control signals are conventional ones.

The data transmission circuit 101 includes a logical circuit 102, P-type MOS transistors (hereinafter referred to as the "pMOSs") 103 and 104, and N-type MOS transistors (hereinafter referred to as the "nMOSs") 105 and 106. With this construction, the data transmission circuit 101 converts 2-bit data into a four-valued signal and outputs the four-valued signal to the transmission line 112. Also, the electric potentials GND1, GND2, VDD2, and VDD1 are applied to the data transmission circuit 101 by the first-fourth power sources (not shown), respectively. The electric potentials GND1, GND2, VDD2, and VDD1 respectively correspond to the four possible electric potentials of the four-valued signal and are, for instance, 0V, 1.1V, 2.2V, and 3.3V.

The logical circuit 102 decodes the 2-bit data inputted via input terminals A and B into four output signals, one of which selectively becomes active. One of the MOS transistors 103-106 is turned on by the active output signal.

To do so, the logical circuit 102 includes AND circuits 102a and 102b and NAND circuits 102c and 102d. If the 2-bit data is "00", the output signal from the AND circuit 102a becomes active; if the 2-bit data is "01", the output signal from the AND circuit 102b becomes active; if the 2-bit data is "10", the output signal from the NAND circuit 102c becomes active; and if the 2-bit data is "11", the output signal from the NAND circuit 102d becomes active. Note that the output signals from the AND circuits 102a and 102b are respectively applied to the gate terminals of the nMOSs105 and 106. Therefore, the active output signals from these circuits 102a and 102b are high level. Also, the output signals from the NAND circuits 102c and 102d are respectively applied to the gate terminals of the pMOSs103 and 104. Therefore, the active output signals from these circuits 102c and 102d are low level.

The sources of the pMOSs 103 and 104 are respectively connected to the fourth power source (VDD1) and the third power source (VDD2), the drains of the pMOSs 103 and 104 are both connected to the transmission line 112, and the gates of the pMOSs 103 and 104 are respectively connected to the output terminals of the NAND circuits 102d and 102c. Also, the sources of the nMOSs 105 and 106 are respectively connected to the first power source (GND1) and the second power source (GND2), the drains of the nMOSs 105 and 106 are both connected to the transmission line 112, and the gates of the nMOSs 105 and 106 are respectively connected to the output terminals of the AND circuits 102a and 102b. With these connections, because one of the four transistors is selectively turned on by the output signals from the logical circuit 102, the electric potential of one of the first-fourth power sources is applies to the transmission line 112. Note that the electric potentials of the first-fourth power sources are hereinafter referred to as the "first-fourth power electric potentials". As a result, one of the first-fourth power electric potentials is selectively applied to the transmission line 112 according to the 2-bit data inputted via the input terminals A and B. More specifically, if the 2-bit data is "00", the first power electric potential is applied to the transmission line 112; if the 2-bit data is "01", the second power electric potential is applied to the transmission line 112; if the 2-bit data is "10", the third power electric potential is applied to the transmission line 112; and if the 2-bit data is "11", the fourth power electric potential is applied to the transmission line 112.

The data reception circuit 107 includes comparators 108-110 and a logical circuit 111. With this construction, the data reception circuit 107 performs the inverse operation of the data transmission circuit 101 that converts 2-bit data into a four-valued signal. That is, the data reception circuit 107 inversely converts a four-valued signal into 2-bit data.

The comparators 108-110 compare the electric potential (hereinafter referred to as the "Vout") of the transmission line 112 with three reference potentials REF1-REF3.

Each of the reference potentials is supplied from a power source (not shown) and is determined to fall within one of the ranges between the first-fourth power electric potentials. If the first-fourth power electric potentials are respectively 0V, 1.1V, 2.2V, and 3.3V, for instance, the reference potentials REF3, REF2, and REF1 are respectively set as 0.55V, 1.65V, and 2.75V.

The logical circuit 111 includes an AND circuit and two OR circuits. With this construction, the logical circuit 111 judges which one of the first-fourth power electric potentials the Vout corresponds to. If the Vout is judged as corresponding to the first power electric potential, the logical circuit 111 outputs "00" to output terminals C and D; if the Vout is judged as corresponding to the second power electric potential, the logical circuit 111 outputs "01" to the output terminals C and D; if the Vout is judged as corresponding to the third power electric potential, the logical circuit 111 outputs "10" to the output terminals C and D; and if the Vout is judged as corresponding to the fourth power electric potential, the logical circuit 111 outputs "11" to the output terminals C and D.

The following description concerns the logic of the data inputs and outputs of the data transmission circuit 101 and the data reception circuit 107.

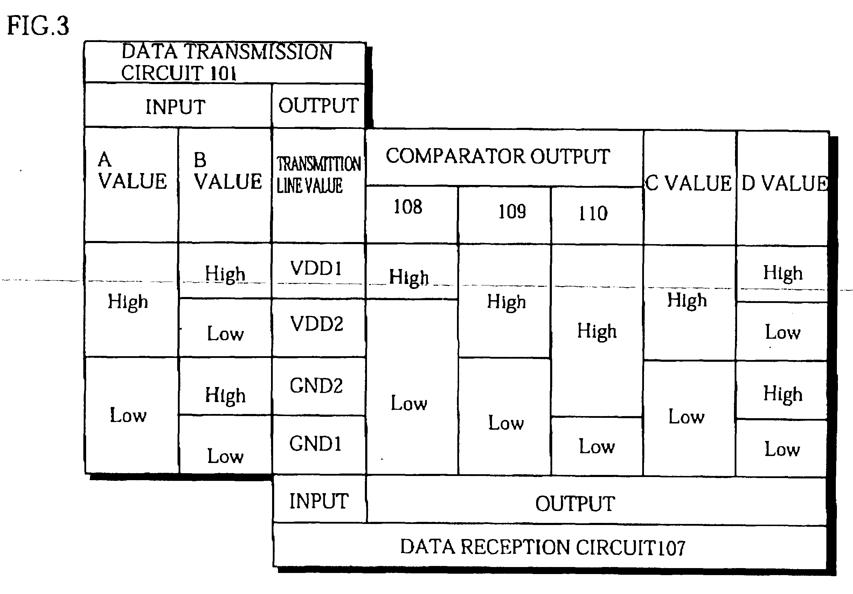

Fig. 3 shows the data input and output logic, and includes an "A value" column, a "B value" column, a "transmission line value" column, a "comparator output" column, a "C value" column, and a "D value" column. In the "A value" column, "High" represents that the signal applied to the input terminal A is at a high level and "Low" represents that the signal applied to the input terminal A is at a low level. In the "B value" column, "High" represents that the signal applied to the input terminal B is at a high level, and "Low" represents that the signal applied to the input terminal B is at a low level. The "transmission line value" column gives VDD1, VDD2, GND2, and GND1 that respectively represent the first-fourth power electric potentials. In the "comparator output" column, "High" represents that the Vout is greater than the corresponding reference potential and "Low" represents that the Vout is smaller than the corresponding reference potential. In the "C value" column, "High" represents that the signal outputted from the output terminal C is at a high level and "Low" represents that the signal outputted from the output terminal C is at a low level. In the "D value" column, "High" represents that the signal outputted from the output terminal D is at a high level and "Low" represents that the signal outputted from the output terminal D is at a low level.

As shown in this drawing, the data transmission circuit 101 converts the 2-bit data "A,B" inputted via the input terminals A and B into a four-valued signal and transmits the four-valued signal to the data reception circuit 107 over the transmission line 112. The data reception circuit 107 compares the four-valued signal from the data transmission circuit 101 with reference signals to generate 2-bit data "C,D", which has the same value as the 2-bit data "A,B", and outputs the 2-bit data "C,D" from the output terminals C and D.

〈Description of Operation〉

The operations of the data transmission circuit 101 and the data reception circuit 107 having the stated constructions are described in detail below by assuming that 2-bit data "01" is inputted via the input terminals A and B.

In the data transmission circuit 101, the 2-bit data "01" is inputted into the logical circuit 102 and only the output signal from the AND circuit 102b becomes active. Therefore, only the nMOS 106 is turned on by the output signal and the other transistors are turned off. As a result, the second power electric potential (GND2:1.1V) is applied to the transmission line 112.

In the data reception circuit 107, the electric potential (Vout=GND2) of the transmission line 112 is applied to the comparators 108-110, which then compare the electric potential with the reference potentials (REF1, REF2, REF3). In this case, the comparator 108 and 109 output "0" (low level) to the logical circuit 111 and the comparator 110 outputs "1" (high level) to the logical circuit 111. The logical circuit 111 decodes the data transmitted over the transmission line 112 according to the values obtained from the comparators and outputs "0" (low level) to the output terminal C and "1" (high level) to the output terminal D.

In this manner, the 2-bit data inputted via the input terminals A and B is transmitted to the output terminals C and D via the data transmission circuit 101, the transmission line 112, and the data reception circuit 107.

As described above, in the bus system of the present embodiment, 2-bit data is transmitted over a single transmission line as a four-valued signal. Therefore, if 64-bit data is to be transmitted, the number of transmission lines of a bus can be reduced from 64 to 32 and the number of terminals of LSIs can also be reduced from 64 to 32. From another point of view, by additionally providing the data transmission circuit 101 and the data reception circuit 107 in LSIs, the transmission capacities of the LSIs can be doubled without increasing the number of terminals of the LSIs (without increasing the package sizes of the LSIs).

It should be noted here that because one of the MOS transistors 103-106 is turned on and the turned-on transistor passes little current, it does not matter whether the MOS transistors have the same on-resistance or different on-resistances.

The present embodiment has been described using specific values for the first-fourth power electric potentials and reference potentials. However, the first-fourth power electric potentials may be set as any other values so long as the first-fourth power electric potentials differ from each other. Also, the reference potentials may be set as any other values so long as each reference potential falls within one of the ranges between the first-fourth power electric potentials and the ranges can be distinguished from each other with the reference potentials. As a result, the first-fourth power electric potentials and the reference potentials can be set freely so long as a condition "VDD1>REF1>VDD2>REF2>GND2>REF3>GND1" is satisfied.

Also, in the present embodiment, the number of reference potentials is one less than the number of power electric potentials. However, more reference potentials may be used.

Further, the present embodiment concerns the case where each transmission line is connected to one data transmission circuit and one data reception circuit. However, each transmission like may be connected to one data transmission circuit and a plurality of data reception circuits. Also, each transmission line may be connected to a plurality of data transmission circuits and a plurality of data reception circuits. In this case, each data transmission circuit should achieve a high impedance by turning off all transistors in the data transmission circuit during the period where the data transmission circuit does not output data.

Also, the present embodiment concerns the case where data is transmitted from the LSI 1 to the LSI 2 in one direction. However, data may be transmitted bidirectionally between the LSI 1 and LSI 2. In this case, each of the LSIs 1 and 2 includes a data transmission circuit and a data reception circuit that are connected to the transmission line 112.

〈Second Embodiment〉

The second embodiment relates to a case where the function of the data transmission circuit 101 shown in Fig. 2 is achieved without the logical circuit 102.

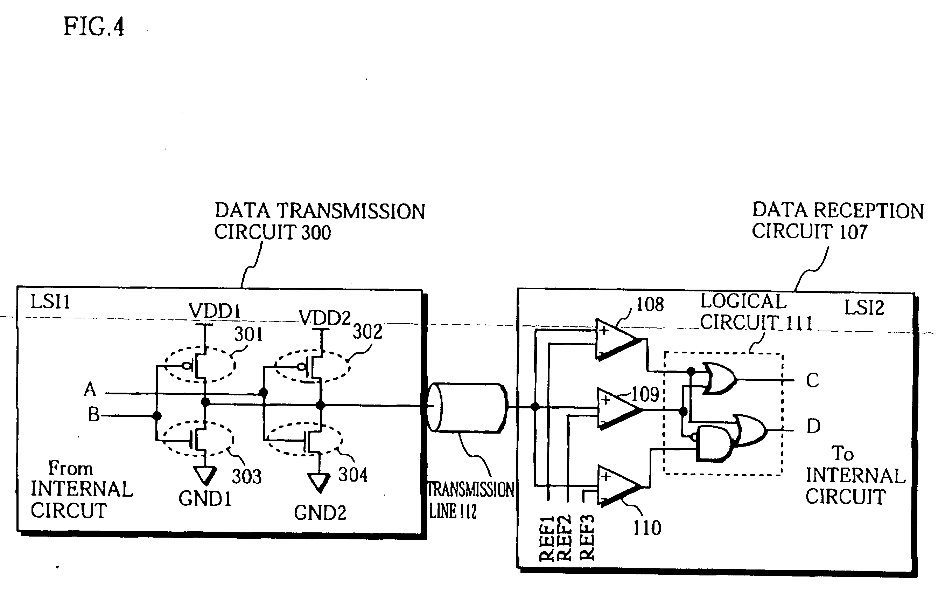

Fig. 4 shows the main construction elements in a circuit portion of a bus system of the second embodiment. The circuit portion corresponds to one transmission line out of a plurality of transmission lines composing a bus. As can be understood by comparing Figs. 2 and 4, the present bus system includes a data transmission circuit 300 instead of the data transmission circuit 101. The following description centers on the differences between the bus systems shown in Figs. 2 and 4 and, therefore, omits the same aspects.

The data transmission circuit 300 differs from the data transmission circuit 101 in that (1) the data transmission circuit 300 does not include the logical circuit 102 and (2) pMOSs 301 and 302 and nMOSs 303 and 304 are used instead of the pMOSs 103 and 104 and the nMOSs 105 and 106. The source terminals of the MOSs 301-304 are respectively connected to the fourth-first power sources, and the drain terminals of the MOSs 301-304 are all connected to the transmission line 112. The gate terminals of the pMOS 302 and the nMOS 304 are both connected to the input terminal A and the gate terminals of the pMOS 301 and the nMOS 303 are both connected to the input terminal B. The form of connection between the pMOS 301 and nMOS 303 is generally called a totem-pole connection. This is the same to the pMOS 302 and the nMOS 304. With these connections, two MOS transistors, out of the MOS transistors 301-304, are simultaneously turned on by 2-bit data inputted via the input terminals A and B. The electric potential of the transmission line 112 becomes a fractional voltage obtained using the on-resistances of the two turned-on transistors. The following is a detailed description of how the electric potential of the transmission line 112 is determined.

If the 2-bit data inputted via the input terminals A and B is "00", the pMOSs 301 and 302 are simultaneously turned on (the nMOSs 303 and 304 are turned off). Therefore, in this case, the transmission line 112 is supplied with the electric potential V1 expressed by Formula 1 given below. Note that in the following formulas, Rp1 refers to the on-resistance of the pMOS 301, Rp2 refers to the on-resistance of the pMOS 302, Rn1 refers to the on-resistance of the nMOS 303, and Rn2 refers to the on-resistance of the nMOS 304.

$$V1=(VDD1-VDD2) \times Rp2/(Rp1+Rp2)+VDD2 \qquad \text{(Formula 1)}$$

If the 2-bit data inputted via the input terminals A and B is "01", the pMOS 302 and the nMOS 303 are simultaneously turned on (the pMOS 301 and the nMOS 304 are turned off). Therefore, in this case, the transmission line 112 is supplied with the electric potential V2 expressed by Formula 2 given below.

$$V2=(VDD2-GND1) \times Rn1/(Rp2+Rn1)+GND1 \qquad \text{(Formula 2)}$$

If the 2-bit data inputted via the input terminals A and B is "10", the pMOS 301 and the nMOS 304 are simultaneously turned on (the pMOS 302 and the nMOS 303 are turned off). Therefore, in this case, the transmission line 112 is supplied with the electric potential V3 expressed by Formula 3 given below.

$$V3=(VDD1-GND2) \times Rn2/(Rp1+Rn2)+GND2 \qquad \text{(Formula 3)}$$

If the 2-bit data inputted via the input terminals A and B is "11", the nMOSs 303 and 304 are simultaneously turned on (the pMOSs 301 and 302 are turned off). Therefore, in this case, the transmission line 112 is supplied with the electric potential V4 expressed by Formula 4 given below.

$$V4=(GND2-GND1)xRn1/(Rn2+Rn1)+GND1 \qquad \text{(Formula 4)}$$

If Rp1, Rp2, Rn1, and Rn2 are all set as the same value (for instance, $10(\Omega)$) and VDD1, VDD2, GND1, and GND2 are respectively set as 3.3(V), 2.2(V), 1.1(V), and 0(V), the electric potentials V1-V4 of the transmission line 112 become 2.75(V), 2.2(V), 1-1(V), and 0.55(V), respectively. In this case, the reference potentials REF1-REF3 are set as 2.475(V), 1.65(V), and 0.803(V), respectively.

As described above, with the bus system of the present embodiment, one of the stated combinations of MOS transistors is selected according to the 2-bit data and the electric potential of the transmission line 112 becomes a fractional voltage obtained by dividing the potential difference of two different power electric potentials using the on-resistances of two turned-on MOS transistors.

In the present embodiment, the hardware scale of the bus system can be reduced in comparison with the bus systems of the first embodiment.

It should be noted here that although having the same on-resistance in the present embodiment, the MOS transistors may have different on-resistances so long as the electric potentials V1-V4 of the transmission line 112 can be distinguished with REF1-REF3. Also, because the electric potentials V1-V4 of the transmission line 112 are determined by the first-fourth power electric potentials and the on-resistances of the MOS transistors 301-304 in this embodiment, the MOS transistors may have any on-resistances so long as the electric potentials V1-V4 can be easily distinguished with REF1-REF3.

〈Third Embodiment〉

The third embodiment relates to a case where the number of power sources in the bus system of the second embodiment is reduced from four to two.

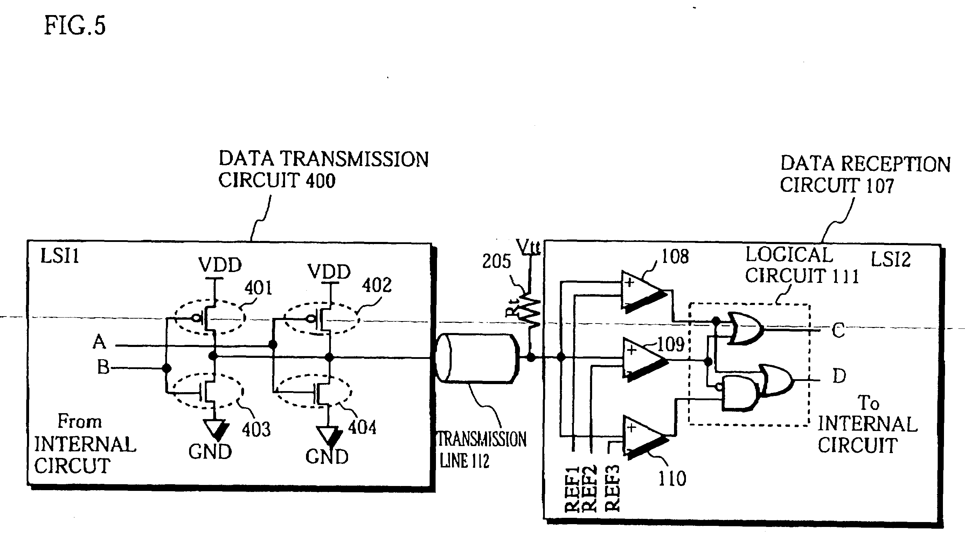

Fig. 5 shows the main construction elements in a circuit portion of a bus system of the third embodiment. The circuit portion corresponds to one transmission line out of a plurality of transmission lines composing a bus. As can be understood by comparing Figs. 4 and 5, the present bus system includes a data transmission circuit 400 instead of the data transmission circuit 300 and the parallel termination resistor 205 is additionally connected to the transmission line 112. The following description centers on the differences between the bus systems shown in Figs. 4 and 5 and, therefore, omits the same aspects.

The data transmission circuit 400 differs from the data transmission circuit 300 in that (1) pMOSs 401 and 402 and nMOSs 403 and 404 are used instead of the pMOSs 301 and 302 and nMOSs 303 and 304 and (2) the first power source (VDD) and the second power source (GND) are used instead of the first-fourth power sources.

The pMOSs 401 and 402 have different on-resistances. The source terminals of the pMOSs 401 and 402 are both connected to the first power source (VDD), the drain terminals of the pMOSs 401 and 402 are both connected to the transmission line 112, and the gate terminals of the pMOS 401 and 402 are respectively connected to the input terminals B and A. Also, the nMOSs 403 and 404 have different on-resistances. The source terminals of the nMOSs 403 and 404 are both connected to the second power source (GND), the drain terminals of the nMOSs 403 and 404 are both connected to the transmission line 112, and the gate terminals of the nMOS 403 and 404 are respectively connected to the input terminals B and A. With these connections, two MOS transistors, out of the MOS transistors 401-404, are simultaneously turned on according to the 2-bit data inputted via the input terminals A and B. More specifically, one of the pMOS 401 and the nMOS 403 and one of the pMOS 402 and the nMOS 404 are simultaneously turned on according to the 2-bit data.

In this embodiment, the electric potential of the transmission line 112 is determined by the combination of turned-on transistors.

If the 2-bit data inputted via the input terminals A and B is "00", the pMOSs 401 and 402 are simultaneously turned on. Consequently, the transmission line 112 is connected to the power source VDD via the pMOS 401, the power source VDD via the pMOS 402, and the termination electric potential Vtt via the parallel termination resistor 205. Because the pMOSs 401 and 402 have on-resistances as described above, the electric potential V1 of the transmission line 112 in this case is obtained from Formula 5 given below. Note that in the following formulas, Rp1, Rp2, Rn1, and Rn2 respectively refer to the on-resistances of the pMOSs 401 and 402 and the nMOSs 403 and 404.

$$V1=(VDD-Vtt)(Rp1+Rp2)Rt/(Rp1 \cdot Rp2+(Rp1+Rp2)Rt)+Vtt \qquad \text{(Formula 5)}$$

If the 2-bit data inputted via the input terminals A and B is "01", the pMOS 402 and the nMOS 403 are simultaneously turned on. Consequently, the transmission line 112 is connected to the power source VDD via the pMOS 402, the power source GND via the nMOS 403, and the termination electric potential Vtt via the parallel termination resistor 205. Because the pMOS 402 and the nMOS 403 have on-resistances as described above, the electric potential V2 of the transmission line 112 in this case is obtained from Formula 6 given below.

$$V2=(Rt \cdot Rn1 \cdot VDD+Rp2 \cdot Rn1 \cdot Vtt+Rp2 \cdot Rt \cdot GND)/(Rt \cdot Rn1+Rp2 \cdot Rn1+Rp2 \cdot Rt) \quad \text{(Formula 6)}$$

If the 2-bit data inputted via the input terminals A and B is "10", the pMOS 401 and the nMOS 404 are simultaneously turned on. Consequently, the transmission line 112 is connected to the power source VDD via the pMOS 401, the power source GND via the nMOS 404, and the termination electric potential Vtt via the parallel termination resistor 205. Because the pMOS 401 and the nMOS 404 have on-resistances as described above, the electric potential V3 of the transmission line 112 in this case is obtained from Formula 7 given below.

$$V3=(Rt \cdot Rn2 \cdot VDD+Rp1 \cdot Rn2 \cdot Vtt+Rp1 \cdot Rt \cdot GND)/(Rt \cdot Rn2+Rp1 \cdot Rn2+Rp1 \cdot Rt) \quad \text{(Formula 7)}$$

If the 2-bit data inputted via the input terminals A and B is "11", the nMOSs 403 and 404 are simultaneously turned on. Consequently, the transmission line 112 is connected to the power source GND via the nMOS 403, the power source GND via the nMOS 404, and the termination electric potential Vtt via the parallel termination resistor 205. Because the nMOSs 403 and 404 have on-resistances as described above, the electric potential V4 of the transmission line 112 in this case is obtained from Formula 8 given below.

$$V4=(Vtt-GND) \cdot Rn1 \cdot Rn2/(Rn1 \cdot Rn2+(Rn1+Rn2)Rt)+GND \quad \text{(Formula 8)}$$

In the case of VDD=3.3(V), Vtt=1.65(V), GND=0(V), Rp1=20(Ω), Rp2=10(Ω), Rn1=20(Ω), and Rn2=10(Ω), V1-V4 respectively become 3.11(V), 2.14(V), 1.16(V), and 0.39(v) and the reference potentials REF1-REF3 are, for instance, set as 2.77(V), 1.15(V), and 0.77(V), respectively.

As described above, the bus system of the present embodiment is not required to include a logical circuit to decode the 2-bit data inputted via the input terminals and the number of power sources is reduced from four to two (VDD and GND). As a result, the hardware scale of the bus system can be reduced in comparison with the bus systems of the first and second embodiments.

〈Fourth Embodiment〉

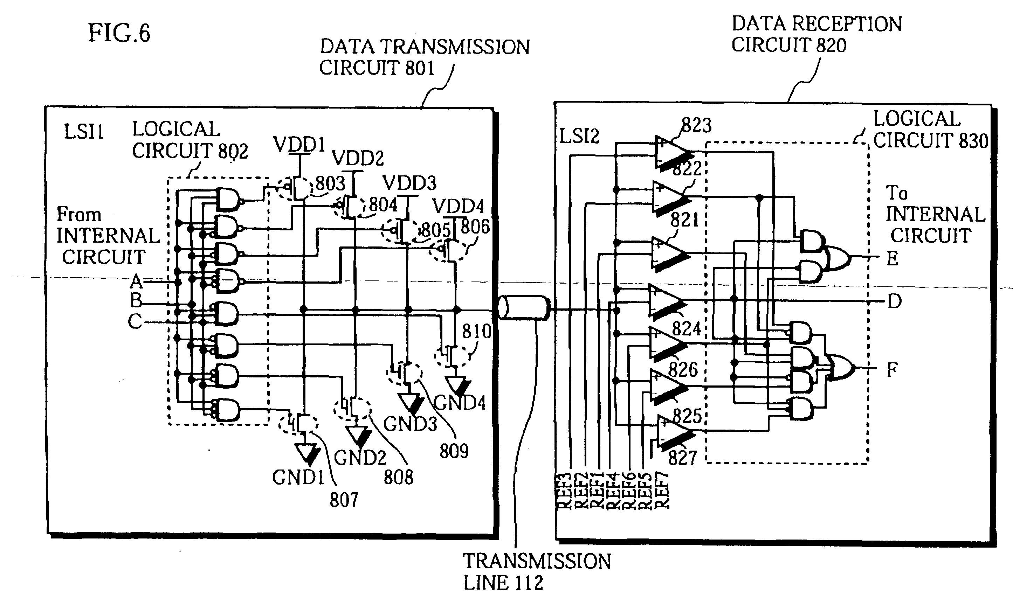

Each of the first-third embodiments relates to a case where 2-bit data is transmitted as a four-valued signal. However, the present embodiment relates to a case where 3-bit data is transmitted as an eight-valued signal. Fig. 6 shows the main construction elements in a circuit portion of a bus system of the present embodiment. The circuit portion corresponds to one transmission line out of a plurality of transmission lines composing a bus, and includes a data transmission circuit 801 in an LSI 1, a transmission line 112, and a data reception circuit 820 in an LSI 2. The same construction elements are provided for each transmission line of the bus. With this construction, the present bus system simultaneously transmits 33-bit data if the number of transmission lines is 11, and simultaneously transmits 66-bit data if the number of transmission lines is 22.

The bus system shown in Fig. 6 has a construction where the bus system shown in Fig. 2 is extended to support 3-bit data transmission. Therefore, the following description centers on the differences between the bus systems shown in Figs. 2 and 6.

In Fig. 6, the electric potentials (VDD1-VDD4 and GND1-GND4) of power sources are determined to have Relation A below and the values of reference potentials (REF1-REF7)

are determined to have Relation B below.

$$GND1<GND2<GND3<GND4<VDD4<VDD3<VDD2<VDD1 \quad \text{Relation A}$$

$$REF1>REF2>REF3>REF4>REF5>REF6>REF7 \quad \text{Relation B}$$

Also, bits inputted via the input terminals A, B, and C are respectively transmitted to the output terminals D, E, and F.

The data transmission circuit 801 includes a logical circuit 802, four pMOSs 803-806, and four nMOS 807-810. The source terminals of the MOSs 803-810 are connected to different power sources, the drain terminals of the MOSs 803-810 are all connected to the transmission line 112, and the gate terminals of the MOSs 803-810 are connected to different output terminals of the logical circuit 802.

The logical circuit 802 turns on one of the MOSs 803-810 according to the 3-bit data inputted via the input terminals A, B, and C. Because the eight MOSs are connected to different power sources, there are eight types of electric potential to be generated in the transmission line 112 and an electric potential corresponding to the turned-on MOS is generated in the transmission line 112.

The data reception circuit 820 includes seven comparators 821-827 and a logical circuit 830. The comparators 821-827 compare the electric potential of the transmission line 112 with seven reference potentials. The logical circuit 830 decodes the comparison results into 3-bit data to be outputted from the output terminals D, E, and F.

It should be noted here that the present bus system is constructed to transmit 3-bit data over a signal transmission line by converting the 3-bit data into one of the eight types of electric potential. However, the present bus system may be constructed to transmit n-bit data. In such a case, the data transmission circuit includes a logical circuit (hereinafter referred to as the "first decoder") having n input terminals and $2^n$ output terminals, $2^{n-1}$ nMOSs, and $2^{n-1}$ pMOSs. The first decoder converts n-bit data inputted via the input terminals into $2^n$ output signals, one of which selectively becomes active, and outputs the output signals to the MOSs from the output terminals. The source terminals of the MOSs are connected to different power sources, the drain terminals of the MOSs are all connected to the transmission line, and the gate terminals of the MOSs are connected to different output terminals of the decoder.

With this construction, the first decoder turns on one of the MOS transistors according to the n-bit data. Consequently, the transmission line 112 is supplied with the electric potential of the power source connected to the source terminal of the turned-on MOS. Because the electric potentials applied to the source terminals of the MOSs differ from each other, there are $2^n$ types of electric potential to be applied to the transmission line 112 and one of the $2^n$ types of electric potential corresponding to the n-bit data is applied to the transmission line 112.

Also, in the case where n-bit data is transmitted, the data reception circuit includes $2^{n-1}$ (the number of power sources-1) comparators and a logical circuit (hereinafter referred to as the "second decoder"). The $2^{n-1}$ comparators compare the electric potential of the transmission line 112 with reference potentials to find which type of electric potential is transmitted over the transmission line 112, and the second decoder decodes the comparison results into n-bit data. In this manner, n-bit data can be properly transmitted over a single transmission line.

〈Fifth Embodiment〉

The present embodiment relates to a case where the function of the bus system shown in Fig. 6 is achieved without the logical circuit 802 of the data transmission circuit 801. In other words, the present embodiment relates to a case where the bus system shown in Fig. 4 for 2-bit data transmission is extended to support 3-bit data transmission.

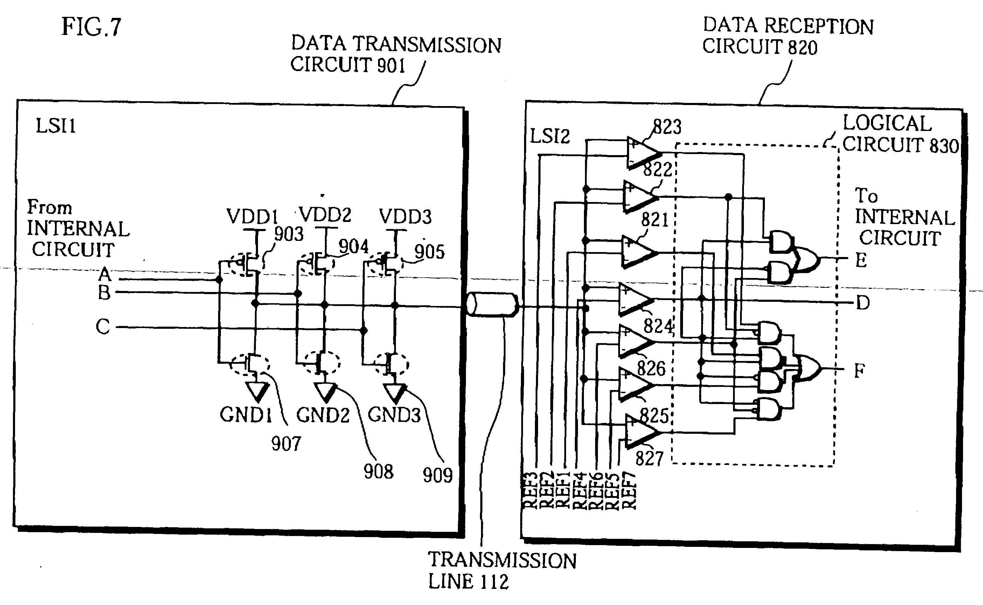

Fig. 7 shows the main construction elements in a circuit portion of a bus system of the fifth embodiment. As can be understood by comparing Figs. 6 and 7, the present bus system includes a data transmission circuit 901 instead of the data transmission circuit 801. The following description centers on the differences between the bus systems shown in Figs. 6 and 7 and, therefore, omits the same aspects.

The data transmission circuit 901 includes pMOSs 903-905 and nMOSs 907-909. The drain terminals of these MOSs are all connected to the transmission line 112. The source terminals of the pMOSs 903-905 are respectively connected to the power sources having electric potentials VDD1, VDD2, and VDD3. The source terminals of the nMOSs 907-909 are respectively connected to the power sources having electric potentials GND1, GND2, and GND3. The gate terminals of the pMOS 903 and the nMOS 907 are connected to the input terminal A, the gate terminals of the pMOS 904 and the nMOS 908 are connected to the input terminal B, and the gate terminals of the pMOS 905 and the nMOS 909 are connected to the input terminal C.

With these connections, three pairs of MOSs that are connected to the same input terminal are formed and one MOS in each pair is turned on according to the 3-bit data inputted via the input terminals A, B, and C. As a result, three MOSs are simultaneously turned on and the electric potential of the transmission line 112 is determined by the on-resistances of the turned-on MOSs and the electric potentials applied to the source terminals of the turned-on MOSs. Accordingly, by appropriately setting the on-resistances of the MOS transistors, a distinct electric potential can be generated for each combination of turned-on transistors. In this embodiment, there are eight types of electric potential to be generated in the transmission line 112.

It should be noted here that the present bus system is constructed to transmit 3-bit data over a single transmission line by converting the 3-bit data into one of the eight types of electric potential. However, the present bus system may be constructed to transmit n-bit data.

In such a case, the data transmission circuit includes n pMOSs and n nMOSs. The source terminals of the MOSs are connected to different power sources and the drain terminals of the MOSs are all connected to the transmission line. The gate terminals of the pMOSs are connected to n different input terminals and the gate terminals of the nMOSs are also connected to the n different input terminals.

With these connections, a plurality of pairs of MOSs that are connected to the same input terminal are formed and one MOS in each pair is turned on. Therefore, the electric potential of the transmission line 112 is determined by the combination of turned-on transistors. That is, because the electric potentials applied to the source terminals of the MOSs differ from each other, there are $2^n$ types of electric potential to be generated in the transmission line and one of the $2^n$ types of electric potential is applied to the transmission line according to the n-bit data.

In the case where the data transmission circuit does not include a logical circuit and uses a plurality of power sources, like the second and present embodiments, each MOS may have any on-resistance. However, it is preferable to set the on-resistance of each MOS so that the current flowing between the power source VDD (VDD1, VDD2, or VDD3) and the power source GND (GND1, GND2, or GND3) does not exceed the current driving capacity of the drain of the MOS. The current driving capacity of the drain of an MOS is, for instance, 16mA, although it depends on the construction of the MOS.

〈Sixth Embodiment〉

The present embodiment relates to a case where the function of the bus system shown in Fig. 6 is achieved without the logical circuit 802. In other words, the present embodiment relates to a case where the bus system shown in Fig. 5 for 2-bit data transmission is extended to support 3-bit data transmission.

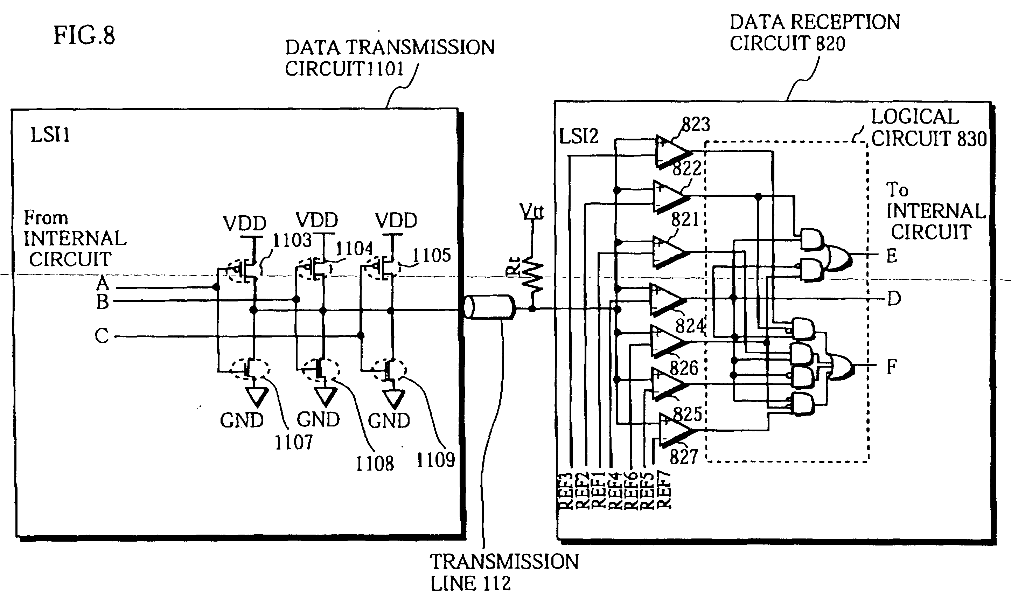

Fig. 8 shows the main construction elements in a circuit portion of a bus system of the sixth embodiment. The circuit portion corresponds to one transmission line out of a plurality of transmission lines composing a bus. In this figure, the same construction elements as in Fig. 6 are assigned the same numbers. The following description centers on the differences between the bus systems shown in Figs. 6 and 8 and, therefore, omits the same aspects.

As can be understood by comparing Figs. 6 and 8, the bus system of the present embodiment includes a data transmission circuit 1101 instead of the data transmission circuit 801.

The data transmission circuit 1101 includes pMOSs 1103-1105 having different on-resistances and nMOSs 1107-1109 having different on-resistances.

The drain terminals of the MOSs are all connected to the transmission line 112. The source terminals of the pMOSs 1103-1105 are all connected to the power source VDD and the source terminals of the nMOSs 1107-1109 are all connected to the power source GND. The gate terminals of the pMOS 1103 and the nMOS 1107 are both connected to the input terminal A, the gate terminals of the pMOS 1104 and the nMOS 1108 are both connected to the input terminal B, and the gate terminals of the pMOS 1105 and the nMOS 1109 are both connected to the input terminal C.

With these connections, three pairs of MOSs that are connected to the same input terminal are formed and one MOS in each pair is turned on according to the 3-bit data inputted via the input terminals A, B, and C. As a result, three MOSs are simultaneously turned on and the electric potential of the transmission line 112 is determined by the on-resistances of the turned-on MOSs and the electric potentials applied to the source terminals of the turned-on MOSs. Accordingly, by appropriately setting the on-resistances of the MOS transistors, a distinct electric potential can be generated for each combination of turned-on transistors. In this embodiment, there are eight types of electric potential to be generated in the transmission line 112.

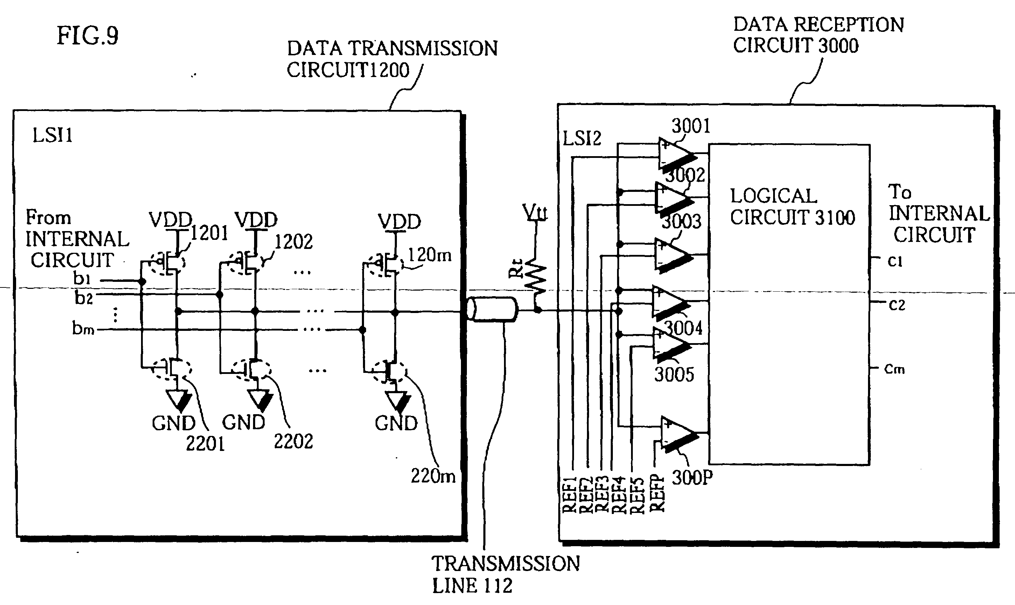

It should be noted here that although the bus system shown in Fig. 8 is constructed to transmit 3-bit data, this bus system may be constructed to transmit m-bit data as shown in Fig. 9.

As shown in Fig. 9, the data transmission circuit 1200 includes m pMOSs 1201-120m and m nMOSs 2201-220m. With this construction, there are $2^m$ possible types of electric potential and one of the $2^m$ types of electric potential is applied to the transmission line 112 according to the m-bit data. Here, the pMOSs 1201-120m have different on-resistances and the nMOSs 2201-220m have different on-resistances. In Fig. 9, respective bits of the m-bit data are referred to as b1, B2, ..., bm. Also, as shown in Fig. 9, the transmission line 112 is connected to the power source Vtt via a parallel termination resistor (pullup resistor) having a resistance Rt.

With this construction, m pairs of MOSs that are connected to the same input terminal are formed and one MOS in each pair is turned on according to the m-bit data inputted via the input terminals. As a result, m MOSs are simultaneously turned on and the electric potential of the transmission line 112 is determined by the on-resistances of the turned-on MOSs and the electric potentials applied to the source terminals of the turned-on MOSs. Accordingly, by appropriately setting the on-resistances of the MOS transistors, a distinct electric potential can be generated for each combination of turned-on transistors. In the case, there are $2^m$ possible electric potentials.

The following description is based on the assumption that the electric potential, which is generated when the m-bit data is "0,0,...,0", is referred to as "V(0,0,...,0)", the electric potential, which is generated when the m-bit data is "1,0,...,0", is referred to as "V(1,0,...,0)", and so on. Each of the $2^m$ electric potentials "V(b1,b2,...,bm)" is determined by Formulas 9-11 given below. Note that Formula 9 relates to cases other than V(0,0,...,0) and V(1,1,...,1), Formula 10 relates to the case of V(0,0,...,0), and Formula 11 relates to the case of V(1,1,...,1). Also, in these formulas, Rpi (i=1-m) refers to the on-resistance of the ith pMOS from the left and Rni refers to the on-resistance of the ith nMOS from the left. Also, bi refers to the bit, out of the m-bit data, applied to the ith input terminal from the top, that is, the gate input value of each of the ith nMOS and pMOS from the left.

$$V(b1,b2,...,bm)=\{(VDD/P+Vtt/Rt) \cdot N+GND\}/(l+N/P+N/Rt) \qquad \text{(Formula 9)}$$

where $P=1/\Sigma[1/\{(1-bi) \cdot Rpi\}]$, $N=1/\Sigma[1/\{(1-bi) \cdot Rni\}]$, and the variation of each $\Sigma$ is $i=1-m$.

$$V(0,0,...,0)=(Rt \cdot VDD+P \cdot Vtt)/P+Rt \qquad \text{(Formula 10)}$$

where $P=1/\Sigma(1/Rpi)$ and the variation of $\Sigma$ is $i=1-m$.

$$V(1,1,...,1)=(N \cdot Vtt+GND)/(N+Rt) \qquad \text{(Formula 11)}$$

where $N=1/\Sigma(1/Rni)$ and the variation of $\Sigma$ is $i=1-m$. If the electric potentials $V(0,0,...,0)-V(1,1,...,1)$ are referred to as V1, V2, ..., $V2^m$, the on-resistance of each MOS transistor is, for instance, determined so that the relation "V1>V2> • • •>$V2^m$" is satisfied in Formula 9.

In Fig. 9, the data reception circuit 3000 includes $2^m$-1 comparators 3001-300p and a logical circuit 3100. Each of the $2^m$-1 reference signals "REF1, REF2, ..., REFp" to be inputted into the comparators falls within one of the ranges between V1, V2, ..., and $V2^m$. The comparison results of the comparators show which one of the $2^m$ electric potentials "V1-$V2^m$" corresponds to the electric potential of the transmission line 112.

The logical circuit 3100 performs the inverse operation of the transmission circuit 1200 and converts the comparison results into m-bit data (c1, c2, ..., cm). Because the logical circuit 3100 performs the inverse operation of the transmission circuit 1200, the m-bit data (c1, c2, ..., cm) becomes the same as the inputted m-bit data (b1, b2, ..., bm).

As described above, with the construction shown in Fig. 9, one of the $2^m$ types of electric potential is applied to the signal transmission line according to the m-bit data. Therefore, without increasing the bus width, the transmission capacity of the bus system is effectively multiplied by m, in comparison with a conventional bus system that performs binary data transmission. Also, because the transmission capacity of the bus system is effectively increased without increasing the number of terminals of LSIs, the package sizes of the LSIs are not increased. As a result, the processing speeds of LSIs can be increased without a great increase in cost.

It should be noted here that in each embodiment described above, a data transmission circuit and a data reception circuit are connected to a data bus. However, a data transmission circuit and a data reception circuit may be connected to an address bus. In this case, like the embodiments above, the number of bits of addresses transmitted over a single transmission line can be effectively increased without increasing the number of address buses and the number of LSI terminals.

Also, in each embodiment where a data transmission circuit does not include a logical circuit, the parallel termination resistor 205 is used. However, this parallel termination resistor 205 may be removed. Also, it is preferable to set the on-resistance of each MOS so that the current flowing between power sources VDD and GND does not exceed the driving capacity (16mA, for instance) of the MOS.

Further, in each embodiment described above, one data reception circuit is used for each data transmission circuit. However, a plurality of data reception circuits may be used for each data transmission circuit. Also, bidirectional data transmission may be performed. In this case, each of the LSIs 1 and 2 includes a data transmission circuit and a data reception circuit that are connected to a transmission line.

Also, bipolar transistors may be used instead of MOS transistors.

Also, in the fourth-sixth embodiments, the on-resistance of each MOS transistor is adjusted by changing the length and width of the gate of the MOS transistor. However, the on-resistance of each MOS transistor may be adjusted by serially connecting a resistor to the MOS transistor.

Also, in each embodiment described above, the present invention is applied to a case where n-bit data is transmitted over a single transmission line of a bus for address/data transmission. However, the present invention is not limited to this. For instance, the present invention may be applied to a case where instead of n-bit data, n signals, out of control signals (such as a clock signal, a read signal, a write signal, an address strobe signal, and a data strobe signal) are transmitted over a single transmission line.

Although the present invention has been fully described by way of examples with reference to the accompanying drawings, it is to be noted that various changes and modifications will be apparent to those skilled in the art. Therefore, unless otherwise such changes and modifications depart from the scope of the present invention, they should be construed as being included therein.

**Claims**

**1.** A bus system comprising:

a bus including a plurality of transmission lines;

a plurality of data output means provided for respective transmission lines, each data output means converting n-bit data (where n is at least 2) into an electric potential, out of $2^n$ types of electric potential, according to a value of the n-bit data and outputting the electric potential to a corresponding transmission line; and

a plurality of data input means provided for respective transmission lines, each data input means restoring n-bit data using an electric potential inputted from a corresponding transmission line.

2. The bus system of Claim 1,
   wherein each data output means includes:

   a decode circuit for decoding n-bit data into $2^n$ signals, one of which selectively becomes active; and
   an electric potential generating circuit for generating an electric potential, out of the $2^n$ types of electric potential, according to the active signal.

3. The bus system of Claim 2,
   wherein the electric potential generating circuit includes $2^n$ transistors, each of which generates one of the $2^n$ types of electric potential and corresponds to one of the $2^n$ signals, and generates an electric potential, out of the $2^n$ types of electric potential, by turning on one transistor corresponding to the active signal.

4. The bus system of Claim 3,
   wherein each transistor is connected between a corresponding transmission line and one of $2^n$ power lines, electric potentials of the $2^n$ power lines differing from each other.

5. The bus system of Claim 1,
   wherein each data output means includes n totem-pole circuits, each totem-pole circuit corresponding to one bit of n-bit data and including two transistors that are connected to each other in a totem-pole form, with a corresponding transmission line being connected between the two transistors,
   wherein one transistor in each totem-pole circuit is simultaneously turned on by a corresponding bit of the n-bit data, and an electric potential, out of the $2^n$ types of electric potential, is generated in the corresponding transmission line according to a combination of the simultaneously turned-on transistors.

6. The bus system of Claim 5,
   wherein each of the $2^n$ types of electric potential corresponds to one combination of simultaneously turned-on transistors in the n totem-pole circuits.

7. The bus system of Claim 6,
   wherein each totem-pole circuit is connected between one of pairs of power lines, electric potentials of power lines in each pair differing from electric potentials of power lines in other pairs, and

   each of the $2^n$ types of electric potential is determined by on-resistances of simultaneously turned-on transistors in the n totem-pole circuits and electric potentials of power lines connected to the simultaneously turned-on transistors.

8. The bus system of Claim 6,
   wherein the n totem-pole circuits are all connected between a first power line and a second power line,

   a termination resistor is connected between the corresponding transmission line and a third power line, and
   each of the $2^n$ types of electric potential is determined by on-resistances of simultaneously turned-on transistors in the n totem-pole circuits, electric potentials of power lines connected to the simultaneously turned-on transistors, a resistance of the termination resistor, and an electric potential of the third power line.

9. The bus system of Claim 1,
   wherein each data input means includes:

   $2^n$-1 comparators, each of which compares an electric potential inputted from a corresponding transmission line with one of $2^n$-1 reference potentials, each of the $2^n$-1 reference potentials falling within one of ranges between the $2^n$ types of electric potential; and
   a restoring means for restoring n-bit data using comparison results of the $2^n$-1 comparators.

**10.** The bus system of Claim 9,
wherein each data output means includes:

a decode circuit for decoding n-bit data into $2^n$ signals, one of which selectively becomes active; and
an electric potential generating circuit for generating an electric potential, out of the $2^n$ types of electric potential, according to the active signal.

**11.** The bus system of Claim 9,
wherein each data output means includes n totem-pole circuits, each totem-pole circuit corresponding to one bit of n-bit data and including two transistors that are connected to each other in a totem-pole form, with a corresponding transmission line being connected between the two transistors,
wherein one transistor in each totem-pole circuit is simultaneously turned on by a corresponding bit of the n-bit data, and an electric potential, out of the $2^n$ types of electric potential, is generated in the corresponding transmission line according to a combination of the simultaneously turned-on transistors.

**12.** A bus system that transmits data between a first LSI and a second LSI, comprising:

a transmission line that connects the first LSI to the second LSI;
a data output means that is provided in the first LSI, converts n-bit data (where n is at least 2) into an electric potential, out of $2^n$ types of electric potential, according to a value of the n-bit data, and outputs the electric potential to the transmission line; and
a data input means that is provided in the second LSI and restores the n-bit data using the electric potential inputted from the transmission line.

**13.** The bus system of Claim 12,
wherein the data input means includes:

$2^n$-1 comparators, each of which compares the electric potential inputted from the transmission line with one of $2^n$-1 reference potentials, each of the $2^n$-1 reference potentials falling within one of ranges between the $2^n$ types of electric potential; and
a restoring means for restoring the n-bit data using comparison results of the $2^n$-1 comparators.

**14.** The bus system of Claim 13,
wherein the data output means includes:

a decode circuit for decoding the n-bit data into $2^n$ signals, one of which selectively becomes active; and
an electric potential generating circuit for generating an electric potential, out of the $2^n$ types of electric potential, according to the active signal.

**15.** The bus system of Claim 14,
wherein the electric potential generating circuit includes $2^n$ transistors, each of which generates one of the $2^n$ types of electric potential and corresponds to one of the $2^n$ signals, and generates an electric potential, out of the $2^n$ types of electric potential, by turning on one transistor corresponding to the active signal.

**16.** The bus system of Claim 15,
wherein each transistor is connected between the transmission line and one of $2^n$ power lines, electric potentials of the $2^n$ power lines differing from each other.

**17.** The bus system of Claim 13,
wherein the data output means includes n totem-pole circuits, each totem-pole circuit corresponding to one bit of the n-bit data and including two transistors that are connected to each other in a totem-pole form, with the transmission line being connected between the two transistors,
wherein one transistor in each totem-pole circuit is simultaneously turned on by a corresponding bit of the n-bit data, and an electric potential, out of the $2^n$ types of electric potential, is generated in the transmission line according to a combination of the simultaneously turned-on transistors.

**18.** The bus system of Claim 17,
wherein each of the $2^n$ types of electric potential corresponds to one combination of simultaneously turned-on transistors in the n totem-pole circuits.

19. The bus system of Claim 18,

wherein each totem-pole circuit is connected between one of pairs of power lines, electric potentials of power lines in each pair differing from electric potentials of power lines in other pairs, and

each of the $2^n$ types of electric potential is determined by on-resistances of simultaneously turned-on transistors in the n totem-pole circuits and electric potentials of power lines connected to the simultaneously turned-on transistors.

20. The bus system of Claim 18,

wherein the n totem-pole circuits are all connected between a first power line and a second power line,

a termination resistor is connected between the transmission line and a third power line, and

each of the $2^n$ types of electric potential is determined by on-resistances of simultaneously turned-on transistors in then totem-pole circuits, electric potentials of power lines connected to the simultaneously turned-on transistors, a resistance of the termination resistor, and an electric potential of the third power line.

# FIG.1

Prior Art

FIG.2

DATA RECEPTION CIRCUIT 107

LSI2

LOGICAL CIRCUIT 111

C

D

To INTERNAL CIRCUIT

108

109

110

REF1
REF2
REF3

TRANSMISSION LINE 112

DATA TRANSMISSION CIRCUIT 101

VDD2
104
VDD1
103
106
GND2
105 GND1
102c
102b
GND1
102d
102a

LSI1
LOGICAL CIRCUIT102

A
B

From INTERNAL CIRCUIT

FIG.3

| DATA TRANSMISSION CIRCUIT 101 | | | | | | | | |
|---|---|---|---|---|---|---|---|---|
| INPUT | | OUTPUT | | | | | | |
| A VALUE | B VALUE | TRANSMITTION LINE VALUE | COMPARATOR OUTPUT | | | C VALUE | D VALUE | |
| | | | 108 | 109 | 110 | | | |
| High | High | VDD1 | High | | | High | High | |
| | Low | VDD2 | | High | High | | Low | |
| Low | High | GND2 | Low | | | Low | High | |
| | Low | GND1 | | Low | Low | | Low | |
| | | INPUT | OUTPUT | | | | | |
| | | DATA RECEPTION CIRCUIT107 | | | | | | |

EP 1 094 396 A2

FIG.4

DATA TRANSMISSION
CIRCUIT 300

DATA RECEPTION
CIRCUIT 107

LSI1

VDD1    VDD2
           301           302

A

B

From
INTERNAL
CIRCUT

GND1    GND2
    303        304

TRANSMISSION
LINE 112

108    LOGICAL
         CIRCUIT 111    LSI2

109

110

REF1
REF2
REF3

C

D

To
INTERNAL
CIRCUIT

EP 1 094 396 A2

18

EP 1 094 396 A2

FIG.5

DATA RECEPTION CIRCUIT 107

LOGICAL CIRCUIT 111

LSI2

To INTERNAL CIRCUIT

C

D

108

109

110

REF1
REF2
REF3

Vtt

205
Rt

TRANSMISSION LINE 112

DATA TRANSMISSION CIRCUIT 400

VDD 402

404
GND

VDD 401

403
GND

A

B

From INTERNAL CIRCUT

LSI1

19

FIG.6

DATA TRANSMISSION CIRCUIT 801

DATA RECEPTION CIRCUIT 820

LSI1    LOGICAL CIRCUIT 802

LOGICAL CIRCUIT 830

From INTERNAL CIRCUIT

To INTERNAL CIRCUIT

A
B
C

VDD1 VDD2 VDD3 VDD4
803  804  805  806

GND1 GND2 GND3 GND4
807  808  809  810

E
D
F

LSI2

REF1 REF2 REF3 REF4 REF5 REF6 REF7

823  822  821  824  826  825  827

TRANSMISSION LINE 112

20

FIG.7

**DATA TRANSMISSION CIRCUIT 901**

**DATA RECEPTION CIRCUIT 820**

**LOGICAL CIRCUIT 830**

LSI1

From INTERNAL CIRCUIT

A
B
C

VDD1 903
VDD1 VDD2 904
VDD2 VDD3 905
VDD3

GND1 907
GND1 GND2 908
GND2 GND3 909
GND3

TRANSMISSION LINE 112

LSI2

823
822
821
824
826
825
827

REF7
REF6
REF5
REF4
REF1
REF2
REF3

To INTERNAL CIRCUIT

E
D
F

FIG.8

DATA RECEPTION CIRCUIT 820

LOGICAL CIRCUIT 830

To INTERNAL CIRCUIT

LSI2

REF1 REF2 REF3 REF4 REF5 REF6 REF7

823 822 821 824 826 825 827

DATA TRANSMISSION CIRCUIT1101

LSI1

From INTERNAL CIRCUIT

A B C

VDD VDD VDD VDD
1103 1104 1105

GND GND GND
1107 1108 1109

TRANSMISSION LINE 112

Vtt Rt

FIG.9